# EUROPEAN PATENT SPECIFICATION

(11) **EP 3 744 808 B1**
(45) Date of publication and mention of the grant of the patent: **30.03.2022**
(21) Application number: 19758212.5
(22) Date of filing: 15.02.2019
(51) Int. Cl.: C09K 5/04, F25B 7/00

(54) **COLD STORAGE DEVICE**
KÄLTESPEICHERVORRICHTUNG
DISPOSITIF DE STOCKAGE À FROID

(30) Priority: 20.02.2018 JP 2018028243
(43) Date of publication of application: 02.12.2020
(73) Proprietor: PHC Holdings Corporation, Tokyo 105-8433 (JP)
(72) Inventor: TOYOOKA, Takashi, Toon-shi, Ehime 791-0395 (JP)
(74) Representative: Grünecker Patent- und Rechtsanwälte PartG mbB
(86) International application number: PCT/JP2019/005525
(87) International publication number: WO 2019/163663

(56) References cited:
- WO-A1-2015/147338
- JP-A- H07 190 516
- JP-A- 2005 511 855
- JP-A- 2006 170 487
- JP-A- 2006 512 426
- JP-A- 2010 531 927
- JP-B2- S5 437 327
- US-A1- 2018 044 567

## Description

### Technical Field

The present invention relates to a refrigeration apparatus.

### Background Art

Conventionally, a refrigeration apparatus including a refrigerant circuit composed of a compressor, a condenser, a throttling device, an evaporator and the like is used. A mixture of a refrigerant selected according to the target temperature and a lubricating oil mainly used for lubrication at a sliding portion of the compressor is circulated in the refrigerant circuit.

Depending on the combination of the refrigerant and the lubricating oil, the compatibility therebetween may not be sufficient. In such a case, the refrigerant lacks the ability to carry lubricating oil. In view of this, mixtures circulated in the refrigerant circuit include oil carriers in addition to the refrigerant and the lubricating oil. For example, as the oil carrier, pentane or propane is used (for example, Patent Literature 1).

### Citation List

### Patent Literature

PTL 1
Japanese Patent Application Laid-Open No. H11-158478

US 2018/044567 A1 discloses a composition for a heat cycle system containing a working medium for heat cycle that has a low global warming potential and high stability, which can be used as a substitute for HFC-134a and HFC-245fa, and a heat cycle system using this composition. The composition for a heat cycle system contains: a working medium for heat cycle containing 1-chloro-2,3,3,3-tetrafluoropropene; and a stabilizer suppressing deterioration of the working medium for heat cycle such as an oxidation resistance improver, a heat resistance improver, or a metal deactivator, and the heat cycle system uses this composition for a heat cycle system.

### Summary of Invention

### Technical Problem

Pentane and propane are combustible substances with low global warming potential. By appropriately setting their mixing ratio, the combustibility of the mixture can be set to a sufficiently small value. On the other hand, there is also a need for a mixture that is less combustible.

Under such circumstances, an object of the present invention is to provide a refrigeration apparatus for circulating a mixture having a smaller combustibility.

### Solution to Problem

This object is achieved by the present invention as claimed in independent claim 1. An advantageous and preferred embodiment of the present invention is defined by dependent claim 2.

The refrigeration apparatus according to an exampleof the present invention includes a compressor, a condenser, a throttling device and an evaporator making up a refrigerant circuit in which a mixture of refrigerant, lubricating oil and oil carrier circulates, the oil carrier includes, in a molecular structure, a carbon double bond and a chlorine atom bonded to one of carbon atoms constituting the carbon double bond.

### Advantageous Effects of Invention

According to the present invention, it is possible to provide a refrigeration apparatus for circulating a mixture having a smaller combustibility.

### Brief Description of Drawings

FIG. 1 is a refrigerant circuit of a refrigeration apparatus according to an embodiment; and
FIG. 2 is a photograph showing compatibility of lubricating oil and oil carrier after cooling.

### Description of Embodiments

Hereinafter, an embodiment of the present invention will be described in detail with reference to the accompanying drawings. The embodiment described below is an example, and the present invention is not limited to this embodiment. In particular, the invention is defined only in the appended independent claim.

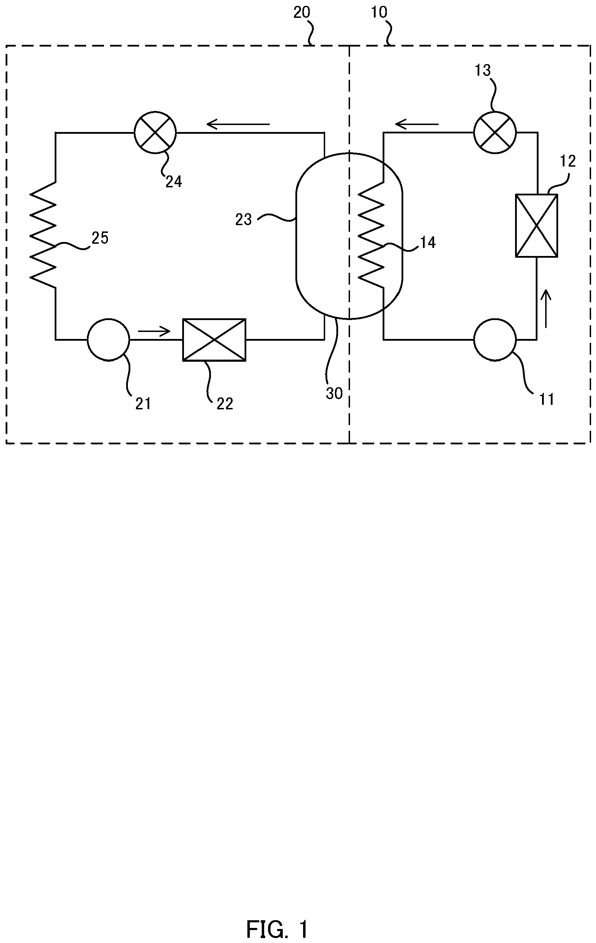

FIG. 1 illustrates an exemplary refrigerant circuit provided in a refrigeration apparatus according to an embodiment of the present invention. Refrigerant circuit 1 is provided in a refrigeration apparatus such as an ultra-low temperature freezer in which a storage has an interior temperature of -80°C or lower, for example.

Refrigerant circuit 1 is a dual refrigeration circuit including high-temperature side refrigerant circuit 10 and low-temperature side refrigerant circuit 20 in which the refrigerant circulates independently of each other.

High-temperature side refrigerant circuit 10 includes high-temperature side compressor 11, high-temperature side condenser 12, and high-temperature side pressure reducer 13 and high-temperature side evaporator 14.

High-temperature side evaporator 14 is an inner tube of cascade capacitor 30, which will be described later.

Each of the above-described devices is connected by a predetermined pipe (high-temperature side pipe) such that a mixture of a refrigerant discharged from high-temperature side compressor 11 or the like again returns to high-temperature side compressor 11. The mixture circulates in the direction of the arrow in FIG. 1.

The mixture circulating in high-temperature side refrigerant circuit 10 includes a refrigerant whose evaporation temperature is -40°C or lower, a lubricating oil such as a mineral oil, and an oil carrier. As the refrigerant, a refrigerant whose boiling point is -40°C or lower such as R290, R22 or R404A is used, for example. The oil carrier will be described in detail later.

Low-temperature side refrigerant circuit 20 includes low-temperature side compressor 21, first heat exchanger 22, second heat exchanger 23, low-temperature side pressure reducer 24 and low-temperature side evaporator 25.

First heat exchanger 22 cools the refrigerant passing through the inside thereof while maintaining the gas phase. Note that first heat exchanger 22 may be a condenser for condensing the refrigerant passing through the inside thereof.

Second heat exchanger 23 is an outer tube of cascade capacitor 30. Specifically, second heat exchanger 23 serving as an outer tube surrounds high-temperature side evaporator 14 serving as an inner tube, and thus the mixture having a low temperature passing inside high-temperature side evaporator 14 and the mixture having a high temperature passing through inside second heat exchanger 23 exchange heat. At this time, the mixture of a high temperature passing inside second heat exchanger 23 is condensed. Here, in the case where first heat exchanger 22 is a condenser, second heat exchanger 23 cools the mixture of the liquid phase passing through the interior thereof.

Each of the above-described devices is connected to a predetermined pipe (low-temperature side pipe) such that the mixture of the refrigerant discharged from the low-temperature side compressor 21 or the like again returns to the low-temperature side compressor 21. The mixture circulates in the direction of the arrow in FIG. 1.

The mixture circulating in low-temperature side refrigerant circuit 20 includes a refrigerant whose evaporation temperature is -80 or lower, a lubricating oil such as a mineral oil, and an oil carrier. As the refrigerant, a refrigerant whose boiling point is -80°C or lower such as R170 or R508B is used, for example. The oil carrier will be described in detail later.

Each of high-temperature side refrigerant circuit 10 and low-temperature side refrigerant circuit 20 may include an auxiliary machine (not illustrated) such as an oil separator, for example.

Hereinafter, the mixture circulating in high-temperature side refrigerant circuit 10 and the mixture circulating in low-temperature side refrigerant circuit 20 will be described as a high-temperature side mixture and a low-temperature side mixture, respectively. In addition, the refrigerant contained in the high-temperature side mixture and the refrigerant contained in the low-temperature side mixture are described as a high-temperature side refrigerant and a low-temperature side refrigerant, respectively.

In high-temperature side refrigerant circuit 10, the high-temperature side refrigerant is circulated while changing the temperature as follows.

First, gaseous high-temperature side refrigerant is sucked into high-temperature side compressor 11 and compressed. At this time, the temperature of the high-temperature side refrigerant is increased. The high-temperature side refrigerant discharged from high-temperature side compressor 11 is cooled and condensed by high-temperature side condenser 12.

Next, the high-temperature side refrigerant flows into high-temperature side pressure reducer 13, and adiabatic expansion occurs. At this time, the temperature of the high-temperature side refrigerant is reduced, and the refrigerant is vaporized. Next, the high-temperature side refrigerant flows into high-temperature side evaporator 14, and exchanges heat with the low-temperature side refrigerant in second heat exchanger 23. Thus, the high-temperature side refrigerant is heated and vaporized.

The high-temperature side refrigerant that has passed through high-temperature side evaporator 14 is again sucked into high-temperature side compressor 11 and compressed.

In addition, in low-temperature side refrigerant circuit 20, the low-temperature side refrigerant is circulated while changing the temperature as follows.

First, the gaseous low-temperature side refrigerant is sucked into the low-temperature side compressor 21 and compressed. At this time, the temperature of the low-temperature side refrigerant is increased. The low-temperature side refrigerant discharged from the low-temperature side compressor 21 is cooled by first heat exchanger 22 and second heat exchanger 23. In this cooling process, the low-temperature side refrigerant condenses.

Next, the low-temperature side refrigerant flows into low-temperature side pressure reducer 24, and adiabatic expansion occurs. At this time, the temperature of the low-temperature side refrigerant is reduced and vaporized. Next, the low-temperature side refrigerant flows into low-temperature side evaporator 25, and exchanges heat with the periphery of low-temperature side evaporator 25. Thus, the low-temperature side refrigerant is heated and vaporized. At this time, the periphery of low-temperature side evaporator 25 is cooled, and thus the refrigeration apparatus including refrigerant circuit 1 can cool the cooling target portion of the interior or the like.

The low-temperature side refrigerant that has passed through low-temperature side evaporator 25 is again sucked into the low-temperature side compressor 21 and compressed.

The present inventors have repeatedly conducted trial and error to determine what kind of substance can be used as the oil carrier contained in the mixture circulating in refrigerant circuit 1. As a result, it has surprisingly been found that a substance including, in the molecular structure, a carbon double bond and a chlorine atom bonded to one of carbon atoms constituting the carbon double bond can be suitably used as an oil carrier.

Such a material has good compatibility with a lubricating oil and is noncombustible, and therefore can be suitably used as an oil carrier.

Examples of such materials include 1-chloro-3,3,3-trifluoropropene, (Z)-1-chloro-2,3,3,3-tetrafluoropropene, and the like. It may also be a mixture of 1,2-dichloroethylene and (Z)-1,1,1,4,4,4-hexafluoro-2-butene. These substances also have an advantage of low global warming potential.

### Experiment 1

Next, Experiment 1 conducted with an ultra-low temperature freezer including refrigerant circuit 1 will be described. In Experiment 1, the temperatures of the low-temperature side mixture at the inlet and outlet of low-temperature side evaporator 25 and the temperature in the storage were measured using a high-temperature side mixture and a low-temperature side mixture described below.

The high-temperature side mixtures used in Experiment 1 contains R404A as the high-temperature side refrigerant.

In Experiment 1, eight kinds of low-temperature side mixtures were used. Each of low-temperature side mixtures 1 to 8 includes R508B as a low-temperature side refrigerant and a lubricating oil.

The low-temperature side mixture 1 is a control and contains n-pentane as an oil carrier. Note that n-pentane is a substance widely used as an oil carrier in the past.

Each of low-temperature side mixtures 2 to 8 contains 1-chloro-3,3,3-trifluoropropene as an oil carrier.

The mixing ratio (= oil carrier weight/(oil carrier weight + refrigerant weight)) of the oil carrier contained in low-temperature side mixtures 1 to 8, and the experimental results are shown in Table 1. Note that the air temperature around the ultra-low temperature freezer during the experiment was 30°C.

**[Table 1]**

| Number | 1 (Control) | 2 | 3 | 4 | 5 | 6 | 7 | 8 |
|---|---|---|---|---|---|---|---|---|
| Oil Carrier | n-pentane | 1-chloro-3,3,3 -trifluoropropene | | | | | | |
| Mixing Ratio (wt%) | 14 or lower | 1.4 | 5.1 | 10.1 | 15.1 | 20.3 | 25.1 | 29.9 |
| Inlet of Low-temperature Side Evaporator (°C) | -90.8 | -91.1 | -90.3 | -90 | -89.6 | -89.2 | -88.6 | -88.2 |
| Outlet of Low-temperature Side Evaporator (°C) | -91.4 | -92 | -89 | -86.6 | -85.2 | -84.6 | -84 | -83.6 |
| Interior Temperature (°C) | 0 | -0.3 | 0 | 0.5 | 1.1 | 1.8 | 2.4 | 3 |
| Evaluation | - | Excellent | Excellent | Good | Good | Passable | Passable | Passable |

In Table 1, the interior temperature section indicates differences from the case where low-temperature side mixture 1 (control) is used.

The mixtures having interior temperatures equal or lower than that of the control are particularly superior. Such a mixture is shown as "Excellent" in the evaluation section. A mixture that sufficiently cooled the interior and had a low-temperature side evaporator 25 outlet temperature of -85°C or lower while the interior temperature is higher than that of the control is excellent. Such a mixture is shown as "Good" in the evaluation section. A mixture that reduced the interior temperature to a temperature lower than -85°C while the low-temperature side evaporator 25 outlet temperature is higher than -85°C has sufficient cooling performance. Such a mixture is shown as "Passable" in the evaluation section. If there is a mixture that failed to reduce the interior temperature to a temperature lower than - 85°C, such a mixture is shown as "Not possible" in the evaluation section. However, there were no such mixtures among the mixtures used in this experiment.

As shown in Table 1, when 1-chloro-3,3,3-trifluoropropene was used as an oil carrier and the mixing ratio was at least 30% or less, cooling performance comparable to that obtained when n-pentane was used was achieved regardless of the mixing ratio.

### Experiment 2

Next, Experiment 2 was conducted to confirm the compatibility of 1-chloro-3,3,3-trifluoropropene with lubricating oils. Experiment 2 was carried out in the following procedure.

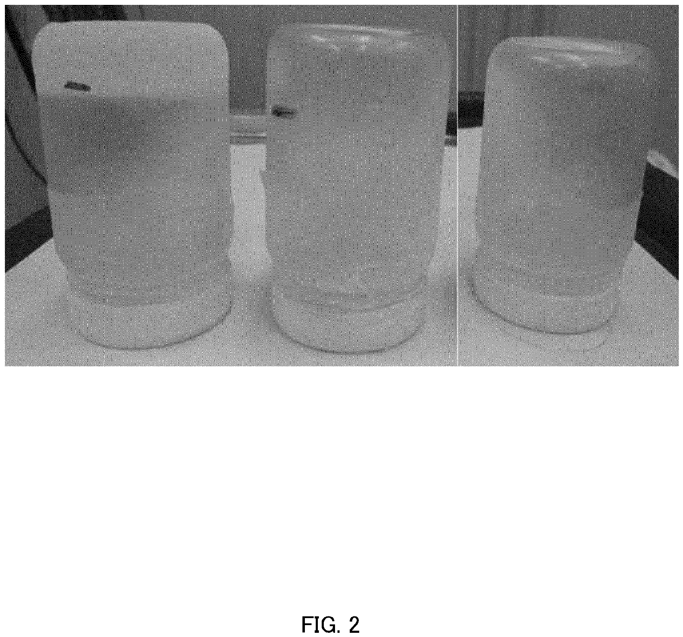

First, a PET container containing only alkylbenzene (control), which is one type of lubricating oil, a PET container containing alkylbenzene and n-pentane, and a PET container containing alkylbenzene and 1-chloro-3,3,3-trifluoropropene were prepared. Next, these PET containers were stored at -90°C or lower for a predetermined time. Next, these PET containers were turned upside down in a room temperature environment. The interiors of these PET containers were observed one minute after the containers were turned upside down. FIG. 2 shows a photograph at this time.

In FIG. 2, the PET container on the left side is a PET container containing the control. The central PET container is the PET container containing alkylbenzene and n-pentane. The PET container on the right is the PET container containing alkylbenzene and 1-chloro-3,3,3-trifluoropropene.

As shown in FIG. 2, in the case of alkylbenzene alone, the fluidity was remarkably reduced by cooling, and the alkylbenzene stuck to the bottom of the PET container. On the other hand, in the case of the mixture of alkylbenzene and n-pentane, the alkylbenzene was mixed in the n-pentane and flowed downward inside the PET container turned upside down. In the case of the mixture of alkylbenzene and 1-chloro-3,3,3-trifluoropropene, alkylbenzene was mixed in 1-chloro-3,3,3-trifluoropropene and flowed downward inside the PET container tuned upside down.

The results of Experiment 2 indicate that 1-chloro-3,3,3-trifluoropropene has sufficient compatibility with the lubricating oil in comparison with n-pentane.

The 1-chloro-3,3,3-trifluoropropene used in Experiments 1 and 2 includes, in its molecular structure, a carbon double bond and a chlorine atom bonded to one of carbon atoms constituting the carbon double bond. The number of carbon atoms in the molecular structure is 3. The 1-chloro-3,3,3-trifluoropropene has such a molecular structure, and is therefore considered to have excellent properties as an oil carrier that is noncombustible and has good compatibility with oil, for example.

Conversely, a substance including, in its molecular structure, a carbon double bond and a chlorine atom bonded to one of carbon atoms constituting the carbon double bond, in particular, a substance having 3 carbon atoms, has excellent properties as an oil carrier. Examples of such materials include (Z)-1-chloro-2,3,3,3-tetrafluoropropene in addition to 1-chloro-3,3,3-trifluoropropene.

### Experiment 3

Next, Experiment 3, which is another experiment conducted with an ultra-low temperature freezer including refrigerant circuit 1, will be described. In Experiment 3, only high-temperature side refrigerant circuit 10 was operated. That is, it can be said that Experiment 3 is an experiment that was conducted by operating an ultra-low temperature freezer including refrigerant circuit 1 as a refrigeration apparatus including a single-unit refrigerant circuit. Note that the air temperature around the ultra-low temperature freezer during the experiment was 5°C.

In Experiment 3, the mixture circulating in high-temperature side refrigerant circuit 10 was gradually changed. Specifically, at the beginning of the experiment, a mixture including R404A as a refrigerant and alkylbenzene as a lubricating oil was circulated. Hereinafter, the state two days after starting the circulation of the mixture under this condition is referred to as "State 1". Note that State 1 is a state where the interior temperature is sufficiently cooled. In addition, the state about 5 days after starting the mixture circulation in this condition is referred to as "State 2".

The state after State 2 is set, and 1-chloro-3,3,3-trifluoropropene as an oil carrier is added to the mixture, and, the mixture is further circulated for about one day is referred to as "State 3". In State 3, the ratio (hereinafter, "weight ratio") of the oil carrier weight to the sum of the oil carrier weight and the refrigerant weight is 1.4 wt%. The state after "State 3" is set and 1-chloro-3,3,3-trifluoropropene is added to set the weight ratio to 3.9wt% by weight, and, the mixture is further circulated for about one day is referred to as "State 4".

Temperatures at the inlet and outlet of high-temperature side evaporator 14, the suction port of high-temperature side compressor 11, and the interior of the freezer chamber in State 1 to State 4 are shown in Table 2. In Experiment 3, State 1 was set as the reference state (control). The temperatures at the suction port of high-temperature side compressor 11 and the interior of the freezer chamber indicate the amount of change from State 1. Table 2 also shows the weight ratio of the oil carrier in each state.

**[Table 2]**

| State | 1(control) | 2 | 3 | 4 |
|---|---|---|---|---|
| Weight ratio of Oil Carrier (wt%) | 0 | 0 | 1.4 | 3.9 |
| Temperature at Inlet of Evaporator (°C) | -55.3 | -49.5 | -50.0 | -52.5 |
| Temperature at Outlet of Evaporator (°C) | -54.2 | -52.4 | -52.5 | -52.6 |
| Temperature at Suction Port of Compressor (°C) | 0 or higher | lower than 0 | lower than 0 | 0 or higher |
| Interior Temperature (°C) | 0 | 0.3 | -0.1 | -0.2 |
| Evaluation | - | Not possible | Good | Excellent |

Comparison between State 1 and State 2 reveals that the performance of the refrigeration apparatus deteriorated over time in the case where 1-chloro-3,3,3-trifluoropropene as an oil carrier was not mixed in the mixture. Specifically, the temperatures at the inlet and outlet of high-temperature side evaporator 14 were increased, and moreover, their temperature difference, i.e., the temperature gradient became large. In addition, the inlet temperature of high-temperature side compressor 11 became less than 0°C. This indicates that the degree of superheat at high-temperature side evaporator 14 cannot be kept at an appropriate value. In addition, the interior temperature rose. State 2 is evaluated as "Not possible".

A possible reason of such deterioration of the performance is that as the operation time becomes longer, the amount of lubricating oil returning to high-temperature side compressor 11 is reduced, i.e., the oil carrier is not contained in the mixture.

On the other hand, in State 3 where 1-chloro-3,3,3-trifluoropropene as an oil carrier was mixed at 1.4wt% by weight, each numerical value was improved in comparison with State 2. Specifically, the temperatures of the inlet and outlet of high-temperature side evaporator 14 were reduced, and moreover, the temperature difference thereof is reduced. Further, the interior temperature was reduced to a value lower than that of State 1. That is, in State 3, the performance of the refrigeration apparatus was restored. State 3 is evaluated as "Good."

In addition, in State 4 where 1-chloro-3,3,3-trifluoropropene as an oil carrier was mixed at 3.9wt% by weight, each numerical value was further improved in comparison with State 3. Specifically, the temperatures at the inlet and outlet of high-temperature side evaporator 14 were further reduced, and moreover, the temperature difference thereof was further reduced. In addition, the inlet temperature of high-temperature side compressor 11 became 0°C or higher. This indicates that the degree of superheat at high-temperature side evaporator 14 was restored to an appropriate value. Moreover, the interior temperature was further reduced to a value lower than that of State 3. That is, in State 4, the performance of the refrigeration apparatus was further restored. State 4 is evaluated as "Excellent."

A possible reason for the restoration of the performance in State 3 and State 4 is that as the addition amount of 1-chloro-3,3,3-trifluoropropene as an oil carrier to the mixture increases, the amount of lubricating oil returning to high-temperature side compressor 11 increases.

From Experiment 3, it was confirmed that by mixing 1-chloro-3,3,3-trifluoropropene with a mixture of refrigerant and lubricating oil, the oil return was improved and the performance of the refrigeration apparatus was improved.

Note that the oil conveying performance of the oil carrier is higher in a liquid phase than in a gas phase. In addition, the temperature of the mixture at the suction port of high-temperature side compressor 11 depends on the outside air temperature more than the degree of superheat in the evaporator although it depends also on the degree of superheat in the evaporator. Therefore, it is advantageous that the boiling point of the oil carrier is higher than the outside air temperature since the oil carrier can be present in the liquid phase at the suction port of high-temperature side compressor 11. That is, a substance including, in the molecular structure, a carbon double bond and a chlorine atom bonded to one of carbon atoms constituting the carbon double bond, and having a boiling point equivalent to or higher than the outside air temperature of, for example, 5°C, is advantageous as an oil carrier.

In addition, the present invention is not limited to the embodiment described above, and various modifications and applications are possible without departing from the gist.

For example, the refrigeration apparatus according to the embodiment of the present invention is not limited to an ultra-low temperature freezer, and may be a refrigeration apparatus such as a biomedical freezer, a showcase, a refrigerated warehouse, a refrigerated car or an ice-making machine. The obtained cooling temperature can be set to 0°C or lower, -40°C or lower, or -80°C or lower by selecting a refrigerant having a boiling point of 0°C or lower, -40°C or lower, or -80°C or lower, for example. Further, the obtained cooling temperature may be a cryogenic temperature of -150°C or lower as -80°C or lower.

In addition, the refrigerant circuit provided in the refrigeration apparatus according to the embodiment of the present invention is not limited to refrigerant circuit 1 illustrated in FIG. 1 and it is also possible to include only high-temperature side refrigerant circuit 10, for example. In this case, high-temperature side evaporator 14 cools the storage or the like without making up cascade capacitor 30.

The disclosure of the description, the scope of claims, the drawings and the abstract contained in Japanese patent application No. 2018-028243, filed February 20, 2018, is all incorporated in this application.

### Industrial Applicability

The present invention is suitably used as a refrigeration apparatus.

### Reference Signs List

- 1: Refrigerant circuit
- 10: High-temperature side refrigerant circuit
- 11: High-temperature side compressor
- 12: High-temperature side condenser
- 13: High-temperature side pressure reducer
- 14: High-temperature side evaporator
- 20: Low-temperature side refrigerant circuit
- 21: Low-temperature side compressor
- 22: First heat exchanger
- 23: Second heat exchanger
- 24: Low-temperature side pressure reducer
- 25: Low-temperature side evaporator
- 30: Cascade capacitor

## Claims

1. A refrigeration apparatus comprising:
a compressor (11, 21), a condenser (12, 22), a throttling device (13, 24) and an evaporator (14, 25) making up a refrigerant circuit (1, 10, 20) in which a mixture of refrigerant, lubricating oil and oil carrier circulates,
wherein the oil carrier comprises, in a molecular structure, a carbon double bond and
a chlorine atom bonded to one of carbon atoms constituting the carbon double bond, and,
wherein the boiling point of the refrigerant is -80°C or lower.

2. The refrigeration apparatus according to claim 1, wherein a carbon number of the molecular structure is 3.

## Patentansprüche

1. Kühlvorrichtung, die umfasst:
einen Kompressor (11, 21), einen Kondensator (12, 22), eine Drosseleinrichtung (13, 24) sowie einen Verdampfer (14, 25), die einen Kältemittelkreislauf (1, 10, 20) bilden, in dem ein Gemisch aus Kältemittel, Schmieröl und Ölträger zirkuliert,
wobei der Ölträger in einer molekularen Struktur eine Kohlenstoff-Doppelbindung und
ein Chlor-Atom umfasst, das an eines der Kohlenstoffatome gebunden ist, die die Kohlenstoffdoppelbindung bilden, und
der Siedepunkt des Kältemittels bei -80°C oder darunter liegt.

2. Kühlvorrichtung nach Anspruch 1, wobei eine Kohlenstoffzahl der molekularen Struktur 3 beträgt.

## Revendications

1. Appareil de réfrigération comprenant :
un compresseur (11, 21), un condenseur (12, 22), un dispositif d'étranglement (13, 24) et un évaporateur (14, 25) constituant un circuit réfrigérant (1, 10, 20) dans lequel circule un mélange de réfrigérant, d'huile lubrifiante et de véhicule d'huile,
le véhicule d'huile comprenant, dans une structure moléculaire, une double liaison carbone et un atome de chlore lié à l'un des atomes de carbone constituant la double liaison carbone, et
le point d'ébullition du réfrigérant étant inférieur ou égal à -80 °C.

2. Appareil de réfrigération selon la revendication 1, dans laquelle un nombre de carbones de la structure moléculaire est égal à 3.
